(19) **Europäisches Patentamt**

**European Patent Office**

**Office européen des brevets**

(11) **EP 1 416 566 A2**

(12) **EUROPÄISCHE PATENTANMELDUNG**

(43) Veröffentlichungstag:
06.05.2004 Patentblatt 2004/19

(51) Int Cl.⁷: $H01M\ 8/06$, $H01M\ 8/04$

(21) Anmeldenummer: 03021068.6

(22) Anmeldetag: 18.09.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **12.10.2002 DE 10247710**

(71) Anmelder: **Volkswagen Aktiengesellschaft
38436 Wolfsburg (DE)**

(72) Erfinder:
- **Kindermann, Lutz-Herbert, Dr.
  38154 Königslutter-Boimstorf (DE)**
- **König, Axel, Dr.
  38448 Wolfsburg (DE)**

(54) **Brennstoffzellensystem, insbesondere eines Kraftfahrzeugs**

(57) Das Brennstoffzellensystem (10), insbesondere eines Kraftfahrzeugs, enthält eine Brennstoffzelleneinheit (12), der eine Kühleinheit (14) und eine Erwärmungseinheit (16) zugeordnet sind. Hierbei ist vorgesehen, dass die Kühleinheit (14) und die Erwärmungseinheit (16) jeweils in der Brennstoffzelleneinheit (12) integriert angeordnet sind.

Fig.

EP 1 416 566 A2

**Beschreibung**

Die Erfindung betrifft ein Brennstoffzellensystem, insbesondere eines Kraftfahrzeugs, mit einer Brennstoffzelleneinheit, der eine Kühleinheit und eine Erwärmungseinheit zugeordnet sind, gemäß Oberbegriff des Anspruchs 1.

Brennstoffzellensysteme der eingangs genannten Art sind bekannt. Dabei wird die Brennstoffzelleneinheit (Brennstoffzellen-Stack) eines derartigen Brennstoffzellensystems mittels einer oder mehrerer externer Wärmequellen, insbesondere mittels eines vorgewärmten Gasstroms, der von außen in die Brennstoffzellen zu deren Erwärmung zugeführt wird, auf eine erwünschte Betriebstemperatur erwärmt. Eine derartige Erwärmung auf eine erwünschte Betriebstemperatur der Brennstoffzellen erfolgt beispielsweise bei einem Kaltstart des Brennstoffzellensystems. Die Brennstoffzellen werden solange erwärmt, bis im Brennstoffzellensystem die Bereitstellung einer elektromotorischen Kraft gewährleistet ist. Nach Erreichen der erwünschten Betriebstemperatur werden die Brennstoffzellen anschließend mittels einer Kühleinheit derart gekühlt, dass eine vorgebbare, maximale Betriebstemperatur nicht überschritten wird. Die Kühlung erfolgt dabei ebenfalls mittels einer in Bezug auf die Brennstoffzellen externen Kühlquelle, beispielsweise in Form eines vorgekühlten Gasstroms, mit welchem die Brennstoffzelleneinheit beaufschlagt wird. Eine derartige bekannte Temperaturregelung einer Brennstoffzelleneinheit ist verhältnismäßig aufwendig und uneffizient.

Es ist Aufgabe der Erfindung, ein Brennstoffzellensystem der eingangs genannten Art vorzuschlagen, das eine relativ einfache und effiziente Temperatureinstellung der Brennstoffzelleneinheit ermöglicht.

Zur Lösung dieser Aufgabe wird ein Brennstoffzellensystem mit den Merkmalen des Anspruchs 1 vorgeschlagen. Das Brennstoffzellensystem ist erfindungsgemäß dadurch gekennzeichnet, dass die Kühleinheit und die Erwärmungseinheit jeweils in der Brennstoffzelleneinheit integriert angeordnet sind. Aufgrund dieser Anordnung erfolgt somit eine zur Brennstoffzellenerwärmung nutzbare Wärmeerzeugung innerhalb der Brennstoffzelleneinheit, so dass auf eine verhältnismäßig aufwendige externe Erwärmung der Brennstoffzelleneinheit beziehungsweise auf eine Vorheizung eines Wärmeträgers und dessen anschließende Zuführung in die Brennstoffzelleneinheit verzichtet werden kann. Eine innerhalb der Brennstoffzelleneinheit erfolgende Wärmeerzeugung und -übertragung erlaubt eine verhältnismäßig schnelle und energetisch günstige Brennstoffzellenerwärmung, insbesondere bei einem Kaltstart des Brennstoffzellensystems. Entsprechende Vorteile hinsichtlich einer erwünschten Brennstoffzellenkühlung lassen sich mittels der in der Brennstoffzelleneinheit integrierten Kühleinheit erzielen. Es ist somit möglich, eine relativ schnelle und effiziente Temperaturregelung der Brennstoffzelleneinheit durchzuführen.

Dabei sind die im Vergleich zu einer bekannten, externen Kühl- beziehungsweise Erwärmungsgaszuführung in die Brennstoffzelleneinheit auftretenden Verlustleistungen besonders gering, so dass das erfindungsgemäße Brennstoffzellensystem auf energetisch günstige Weise temperaturgeregelt werden kann. Ferner erlaubt eine Integration der Kühleinheit und der Erwärmungseinheit in der Brennstoffzelleneinheit einen verhältnismäßig einfachen und kompakten konstruktiven Aufbau des Brennstoffzellensystems, da auf aufwendige, insbesondere adiabate Gaszuführsysteme in die Brennstoffzelleneinheit verzichtet werden kann.

Mit Vorteil ist die Kühleinheit als endotherme Reaktionseinheit und die Erwärmungseinheit als exotherme Reaktionseinheit ausgebildet. Eine derartige Kühleinheit beziehungsweise Erwärmungseinheit ist in verhältnismäßig einfacher Weise in einer Brennstoffzelleneinheit integrierbar. Vorzugsweise sind die Kühleinheit und die Erwärmungseinheit hierzu als Katalysator ausgebildet. Insbesondere bildet die Anodenseite der Brennstoffzelleneinheit die Kühleinheit und die Erwärmungseinheit. Bei einer endothermen Reaktion wird zur Durchführung der chemischen Umsetzung der Umgebung (Brennstoffzelleneinheit) Wärme entzogen, während bei einer exothermen Reaktion zur Durchführung der chemischen Umsetzung Wärme an die Umgebung abgegeben wird.

Vorzugsweise ist der Brennstoff Kohlenwasserstoff, insbesondere gasförmiges Methan. Dabei erfolgt bei der endothermen Reaktion eine Umsetzung von Methan zu Kohlenmonoxid und Wasserstoff unter Verbrauch von Wärme aus der Umgebung. Zur Durchführung der exothermen Reaktion erfolgt eine Umsetzung von Wasserstoff und Sauerstoff zu Wasser und/ oder eine Umsetzung von Kohlenmonoxid und Wasser zu Kohlendioxid und Wasserstoff. Bei diesen beiden chemischen Umsetzungen wird Wärme frei, welche an die Umgebung (Brennstoffzelleneinheit) abgegeben werden kann.

Vorteilhafterweise ist eine Sauerstoffzuführeinrichtung vorgesehen. Die Sauerstoffzuführeinrichtung gewährleistet die Bereitstellung von Sauerstoff zur Durchführung einer der exothermen Reaktionen, das heißt zur chemischen Umsetzung von Wasserstoff und Sauerstoff zu Wasser.

Bei einem bevorzugten Ausführungsbeispiel ist vorgesehen, dass die Sauerstoffzuführungseinrichtung durch einen Diffussionsprozess von Sauerstoffionen von der Kathodenseite durch einen Elektrolyten der Brennstoffzelleneinheit zur Anodenseite der Brennstoffzelleneinheit realisierbar ist. Hierdurch ist gewährleistet, dass die exotherme Reaktion auf der Anodenseite der Brennstoffzelleneinheit aufrecht erhalten wird.

Die Kühleinheit und die Erwärmungseinheit werden mit Vorteil durch die Anodenseite der Brennstoffzelleneinheit ausgebildet. Es ist somit möglich, anodenseitig die Brennstoffzelleneinheit auf effektive Weise hinsichtlich ihrer Betriebstemperatur zu regeln.

Entsprechend einer bevorzugten Ausführungsform ist einer der Brennstoffzellen-Betriebsstoffe ein Kraftstoff, insbesondere Benzin oder Diesel. Der Einsatz von derartigen Kraftstoffen zum Betreiben eines Brennstoffzellensystems ist an sich bekannt.

Mit Vorteil ist eine Steuer- oder Regelungseinheit mit der Kühleinheit und mit der Erwärmungseinheit operativ verbunden zur Temperatureinstellung der Brennstoffzelleneinheit. Dies ermöglicht eine steuerungstechnisch verhältnismäßig einfache Temperatureinstellung der Brennstoffzelleneinheit mittels Aktivierung und/oder Deaktivierung der Kühleinheit und der Erwärmungseinheit.

Weitere vorteilhafte Ausgestaltungen der Erfindung ergeben sich aus der Beschreibung.

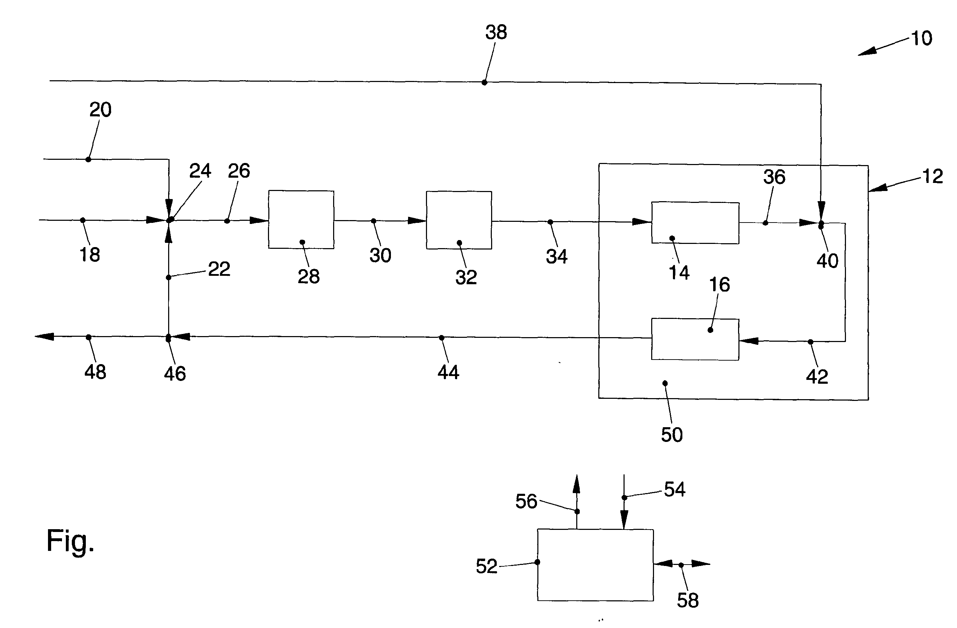

Die Erfindung wird nachfolgend in einem Ausführungsbeispiel anhand einer zugehörigen Zeichnung näher erläutert. Die einzige Figur zeigt ein Blockdiagramm eines erfindungsgemäßen, teilweise dargestellten Brennstoffzellensystems.

Die Figur zeigt ein Blockdiagramm eines allgemein mit 10 bezeichneten Brennstoffzellensystems, insbesondere eines nicht in der Figur gezeigten Kraftfahrzeugs, wobei das Brennstoffzellensystem 10 lediglich teilweise dargestellt ist. Das Brennstoffzellensystem 10 enthält eine Brennstoffzelleneinheit 12, wobei in der Figur deren Anodenseite 50 gezeigt ist. Der Brennstoffzelleneinheit 12 ist eine Kühleinheit 14 und eine Erwärmungseinheit 16 zugeordnet, welche beide in der Brennstoffzelleneinheit 12 integriert angeordnet sind. Bei der Kühleinheit 14 handelt es sich um eine endotherme Reaktionseinheit und bei der Erwärmungseinheit 16 um eine exotherme Reaktionseinheit. Die Kühleinheit 14 und die Erwärmungseinheit 16 sind als ein in der Brennstoffzelleneinheit 12 integrierter Katalysator ausgebildet.

Zum Betreiben des Brennstoffzellensystems 10 werden Luft gemäß Pfeil 18, Kraftstoff (beispielsweise Benzin oder Diesel) gemäß Pfeil 20 und ein Anoden-Off-Gas (insbesondere dampfförmiges Wasser) gemäß Pfeil 22, der eine Rückführleitung darstellt, einer Verbindungsstelle 24 zugeführt, von welcher das sich bildende Brennstoffzellen-Betriebsstoffgemisch gemäß Pfeil 26 einem Wärmetauscher 28 zugeführt wird. Mittels des Wärmetauschers 28 erfolgt eine Vorwärmung des Brennstoffzellen-Betriebsstoffgemischs, das anschließend gemäß Pfeil 30 einem Reformer 32 zugeführt wird. Bei dem Reformer 32 handelt es sich um eine adiabate Funktionseinheit des Brennstoffzellensystems 10, mittels welcher aus dem vorgewärmten Brennstoffzellen-Betriebsstoffgemisch ein Reformatgasgemisch erzeugt wird, das gemäß Pfeil 34 anodenseitig der Brennstoffzelleneinheit 12 zugeführt wird. Das Reformatgas (Brennstoffzellengasgemisch) enthält insbesondere Methan ($CH_4$), Wasser ($H_2O$), Wasserstoff ($H_2$) und Kohlenmonoxid (CO). Das Reformatgas wird gemäß Pfeil 34 zunächst der Einheit 12, die in diesem Betriebsbereich als Kühleinheit 14 arbeitet zugeführt, mittels welcher folgende endotherme Umsetzung erhalten werden kann:

$$CH_4 + H_2O \rightarrow CO + 3H_2$$

Von der Kühleinheit 14 wird das Brennstoffzellengasgemisch gemäß Pfeil 36 einer Verbindungsstelle 40 zugeführt, welche gleichzeitig mit Sauerstoff ($O_2$) gemäß Pfeil 38 beaufschlagt wird. Hierdurch ist das Verhältnis S/C (Wasserdampf/Kohlenstoff) korrigierbar, insbesondere so, dass die Bildung von Kohlenstoff-Ablagerungen in der Brennstoffzellen-einheit 12 verhindert wird. Von der Verbindungsstelle 40 wird das Brennstoffzellengasgemisch gemäß Pfeil 42 der Erwärmungseinheit 16 zugeführt, mittels welcher folgende exothermen Umsetzungen erhaltbar sind:

$$H_2 + (1/2)O_2 \rightarrow H_2O$$

$$CO + H_2O \rightarrow CO_2 + H_2.$$

Das in der Brennstoffzelleneinheit 12 entstehende Anoden-Off-Gas enthält somit $H_2O$, $CO_2$ und $H_2$ und wird gemäß Pfeil 44 aus der Brennstoffzelleneinheit 12 heraus zu einer Abzweigstelle 46 geführt, von welcher die Abzweigleitung (Pfeil 22) zur Verbindungsstelle 24 und gleichzeitig eine weitere Leitung gemäß Pfeil 48 zu einer Nachbrennereinheit (nicht dargestellt) führt. Das Anoden-Off-Gas wird somit an der Abzweigstelle 46 in einen Rückführungsanodengasstrom (Pfeil 22) und in einen Nachbrennergasstrom (Pfeil 48) unterteilt.

Ferner ist eine Steuer- oder Regelungseinrichtung 52 vorgesehen, die gemäß den Pfeilen 54 und 56 mit der Kühleinheit 14 und mit der Erwärmungseinheit 16, insbesondere über den Reformer 32, operativ wirkverbunden ist zur Temperatursteuerung beziehungsweise -regelung der Brennstoffzelleneinheit 12. Wie bereits oben erwähnt, erfolgt mittels der Kühleinheit 14 ein $CH_4$-Umsatz in Form einer endothermen chemischen Reaktion. Bei dem $CH_4$-Umsatz wird somit der Umgebung (Brennstoffzelleneinheit 12) Wärme entzogen, so dass ein Kühleffekt in der Brennstoffzelleneinheit 12 erzielt wird. Dagegen erfolgt mittels der Erwärmungseinheit 16 ein $H_2$/CO-Umsatz in Form einer exothermen chemischen Reaktion, so dass diesbezüglich Reaktionswärme an die Umgebung (Brennstoffzelleneinheit 12) abgegeben wird. Mittels der Steuer- oder Regelungseinheit 52 lassen sich, insbesondere durch eine Ansteuerung des Reformers 32 zur Erzeugung eines mit $CH_4$ beziehungsweise $H_2$ angereicherten Gases, die Kühleinheit 14 und die Erwärmungseinheit 16 in der Brennstoffzelleneinheit 12 jeweils zu einem geeigneten Zeitpunkt aktivieren beziehungsweise deaktivieren. Die Anodenseite 50 der Brennstoffzelleneinheit 12, die hier die Kühleinheit 12 und die Erwärmungseinheit 16 ausbildet, wird also je nach der Art des zugeführten Gases - CH$_4$-reich/H$_2$-reich als Kühleinheit 12 beziehungsweise Erwärmungseinheit 16 betrieben. Somit sind die Kühleinheit 12 sowie die Erwärmungseinheit 16 in einem einzigen Bauteil - nämlich der Anodenseite 50 der Brennstoffzelleneinheit 12 - integriert.

Hierbei kann beispielsweise zwischen einer Kaltstartphase und einem Normalbetrieb der Brennstoffzelleneinheit 12 unterschieden werden. Während einer Kaltstartphase (insbesondere ab circa 650°C Betriebstemperatur der Brennstoffzelleneinheit 12) werden der Brennstoffzelleneinheit 12 nur geringe bis gar keine Mengen an Methan (CH$_4$) zugeführt. Das der Brennstoffzelleneinheit 12 während dieser Betriebsphase zuzuführende Reformatgas (Pfeil 34) enthält somit im Wesentlichen Wasserstoff (H$_2$) und Kohlenmonoxid (CO). Aufgrund der exothermen Umsetzung von Wasserstoff zu Wasser und Kohlenmonoxid zu Kohlendioxid mittels der Erwärmungseinheit 16 wird die Brennstoffzelleneinheit 12 auf effiziente Weise intern aufgeheizt. Eine derartige Erwärmung ist verhältnismäßig schnell und energetisch günstiger als eine Erwärmung mittels einer externen Heizvorrichtung, beispielsweise mittels Zuführung eines vorgeheizten Gasstroms in die Brennstoffzelleneinheit 12. Nach Erreichen einer vorgebbaren Betriebstemperatur der Brennstoffzelleneinheit 12 kann mit dem Reformatgas (Pfeil 34) ein zunehmend hoher Gehalt an Methan (CH$_4$) in die Brennstoffzelleneinheit 12 zugeführt werden, so dass aufgrund der endothermen Umsetzung des Methans mittels der Kühleinheit 14 eine Kühlwirkung innerhalb der Brennstoffzelleneinheit 12 erzielt und somit eine nicht erwünschte Überhitzung derselben auf effiziente Weise verhindert wird.

Eine derartige Temperatursteuerung beziehungsweise -regelung der Brennstoffzelleneinheit 12 ist auf verhältnismäßig einfache Weise durchführbar. Dabei kann die Steuer- beziehungsweise Regelungseinheit 52 gleichzeitig auch mit weiteren Funktionseinheiten des Brennstoffzellensystems 10 beziehungsweise des Kraftfahrzeugs gemäß Doppelpfeil 58 wirkverbunden sein. Mittels quantitativer Änderung der Brennstoffzuführung (im vorliegenden Ausführungsbeispiel der Zuführung von gasförmigem Methan) in die Brennstoffzelleneinheit 12 in Abhängigkeit der jeweils vorliegenden Brennstoffzellen-Betriebstemperatur ist es möglich, bei geringem Methan-Gehalt im Reformatgas während einer Startphase mittels der Erwärmungseinheit 16 die Brennstoffzelleneinheit 12 verhältnismäßig schnell und effektiv aufzuheizen und bei relativ hohem Methan-Gehalt im Reformatgas während des Normalbetriebs der Brennstoffzelleneinheit 12 mittels der Kühleinheit 14 im Rahmen einer internen Reformierung des gasförmigen Methans die Brennstoffzelleneinheit 12 gleichzeitig zu kühlen, so dass eine vorgebbare und stabile Brennsstoffzellenbetriebstemperatur eingestellt werden kann.

Da die Kühlung der Brennstoffzelleneinheit 12 mittels einer internen Methan-Reformierung erfolgt, kann auf die Zuführung eines aus dem Stand der Technik bekannten Reformatgases mit Luftüberschuss zur Kühlung der Brennstoffzelleneinheit 12 verzichtet werden. Auch werden gegebenenfalls auftretende Verlustleistungen (parasitäre Leistungen) bei der Erwärmung und/oder Kühlung der Brennstoffzelleneinheit 12 mittels des erfindungsgemäßen Brennstoffzellensystems 10 verringert oder gar eliminiert. Bei der Brennstoffzelleneinheit 12 kann es sich um ein sogenanntes "SOFC-Stack" handeln. Der weitere Aufbau und die entsprechende Funktionsweise des Brennstoffzellensystems 10 sind an sich bekannt, so dass auf eine detaillierte Beschreibung diesbezüglich verzichtet wird.

**Patentansprüche**

1.  Brennstoffzellensystem, insbesondere eines Kraftfahrzeugs, mit einer Brennstoffzelleneinheit, der eine Kühleinheit und eine Erwärmungseinheit zugeordnet sind, **dadurch gekennzeichnet, dass** die Kühleinheit (14) und die Erwärmungseinheit (16) jeweils in der Brennstoffzelleneinheit (12) integriert angeordnet sind.

2.  Brennstoffzellensystem nach Anspruch 1, **dadurch gekennzeichnet, dass** die Kühleinheit (14) als endotherme Reaktionseinheit und die Erwärmungseinheit (16) als exotherme Reaktionseinheit ausgebildet ist.

3.  Brennstoffzellensystem nach einem der vorhergehenden Ansprüche, **dadurch gekennzeichnet, dass** die Kühleinheit (14) und die Erwärmungseinheit (16) als ein Katalysator der Brennstoffzelleneinheit (12) ausgebildet sind.

4.  Brennstoffzellensystem nach einem der vorhergehenden Ansprüche, **dadurch gekennzeichnet, dass** der Brennstoff (34) Kohlenwasserstoff, insbesondere gasförmiges Methan, ist.

5.  Brennstoffzellensystem nach einem der vorhergehenden Ansprüche, **dadurch gekennzeichnet, dass** die endotherme Reaktion eine Umsetzung von Methan (34) zu Kohlenmonoxid und Wasserstoff (36) ist.

6.  Brennstoffzellensystem nach einem der vorhergehenden Ansprüche, **dadurch gekennzeichnet, dass** die exotherme Reaktion eine Umsetzung von Wasserstoff und Sauerstoff (42) zu Wasser (44) und/oder eine Umsetzung von Kohlenmonoxid und Wasser (42) zu Kohlendioxid und Wasserstoff (44) ist.

7.  Brennstoffzellensystem nach einem der vorhergehenden Ansprüche, **dadurch gekennzeichnet, dass** eine Sauerstoffzuführeinrichtung (38) vorgesehen ist.

8. Brennstoffzellensystem nach einem der vorhergehenden Ansprüche, **dadurch gekennzeichnet, dass** die Sauerstoffzuführeinrichtung (38) durch einen Diffussionsprozess von Sauerstoffionen von einer Kathodenseite durch einen Elektrolyten der Brennstoffzelleneinheit (12) zur Anodenseite (50) der Brennstoffzelleneinheit (12) realisierbar ist.

9. Brennstoffzellensystem nach einem der vorhergehenden Ansprüche, **dadurch gekennzeichnet, dass** die Anodenseite (50) der Brennstoffzelleneinheit (12) eine einzige Einheit bildet, die in Abhängigkeit von der Feedgaszusammensetzung als Kühleinheit (14) und als Erwärmungseinheit (16) fungieren kann.

10. Brennstoffzellensystem nach einem der vorhergehenden Ansprüche, **dadurch gekennzeichnet, dass** einer der Brennstoffzellen-Betriebsstoffe (18,20,22,38) ein Kraftstoff (20), insbesondere Benzin oder Diesel, ist.

11. Brennstoffzellensystem nach einem der vorhergehenden Ansprüche, **dadurch gekennzeichnet, dass** eine Steuer- oder Regelungseinheit (52) mit der Kühleinheit (14) und mit der Erwärmungseinheit (16) operativ verbunden ist zur Temperatureinstellung der Brennstoffzelleneinheit (12).

Fig.

EP 1 416 566 A2